Europäisches Patentamt

European Patent Office

Office européen des brevets

(19)

(11) Publication number: **0 283 207 B1**

# EUROPEAN PATENT SPECIFICATION

(12)

(45) Date of publication of patent specification: **06.05.92**    (51) Int. Cl.⁵: **B29C 45/17**, B29C 45/23

(21) Application number: **88302084.4**

(22) Date of filing: **10.03.88**

(54) **Injection moulding apparatus.**

<div style="columns:2">

(30) Priority: **16.03.87 GB 8706204**

(43) Date of publication of application:
**21.09.88 Bulletin 88/38**

(45) Publication of the grant of the patent:
**06.05.92 Bulletin 92/19**

(84) Designated Contracting States:
**AT BE CH DE ES FR GR IT LI LU NL SE**

(56) References cited:
**DE-A- 2 716 817**
**GB-A- 2 122 130**
**GB-A- 2 139 548**

(73) Proprietor: **CINPRES LIMITED**
**Apollo Lichfield Road Industrial Estate**
**Tamworth Staffordshire, B79 7TA(GB)**

(72) Inventor: **Sayer, Matthew Emmett**
**10 Browsholme**
**Tamworth Staffordshire(GB)**

(74) Representative: **Bayliss, Geoffrey Cyril et al**
**BOULT, WADE & TENNANT 27 Furnival Street**
**London EC4A 1PO(GB)**

</div>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.18/2.0)

## Description

This invention relates to injection moulding apparatus.

British Patent Specification No. 2139548 describes a process of producing an injection moulding comprising introducing plastics material into a mould space and at one or more selected positions separately introducing a pressurised gas into the stream of plastics material filling the mould to create a gas containing cavity in the plastics material, maintaining the pressurisation in the gas and utilising the pressurised gas in the plastics material to cause the plastics material to flow throughout the mould space with the gas containing cavity within the plastics material, the cavity thereby extending with the plastics material, and when the plastics material has extended over the whole of the mould space, continuing to maintain the gas pressure within the gas containing cavity to hold the plastics material positively against the mould surface as the plastics material solidifies and cools until the moulding can itself sustain the form dictated by the mould surface.

In one embodiment described the pressurised gas is introduced at a position within the mould space, and in an alternative embodiment the gas is introduced at a position upstream of the mould space adjacent the outlet end of a screw ram for introducing the plastics material into the mould space. In each case the gas is introduced through a passageway subsequently to the outlet end of the passageway being immersed in the plastics material, the gas entering the plastics material and forming the gas containing cavity therein.

At the end of the moulding cycle, the gas pressure within the gas containing cavity is relieved before the mould is opened. In each embodiment described in British Patent Specification No. 2139548, a valve is opened to allow the gas to flow back through the passageway through which it was introduced to create the cavity, the gas emitted conveniently passing to atmosphere. This arrangement works well in the embodiment of Specification No. 2139548 in which the outlet end of the passageway is positioned upstream of the mould space and the passageway is relatively short.

However, in the case of the embodiment in Specification No. 2139548 in which the outlet end of the passageway is positioned within the mould space, it has been found to be more difficult to evacuate the cavity sufficiently. There is also a tendency for the outlet end of the passageway to become blocked by plastics material which must first immerse the outlet end of the passageway before gas is introduced and whilst the plastics material is still molten.

For the production of some mouldings, especially mouldings of complex design, it is desirable to introduce the pressurised gas at one or more selected positions, and subsequently to evacuate the gas from the moulding at each position. Such a situation may arise, for example, when it is desired to employ a hot runner system or the choice of gate position is restricted by the desire to avoid excess use of gas ribs. The present invention makes it possible to introduce the gas at any selected position without the aforesaid disadvantages.

Specification DE-A-2716817 describes an injection nozzle device incorporating a spring actuated needle valve. Pressure of the material to be injected overcomes the spring pressure, to move the valve member to open the aperture through which the material is then injected into a mould cavity. When the injection operation is finished, the spring closes the valve member to allow pressurised fluid to be fed into the mould cavity through a passageway in the needle valve to form a hollow portion within the material which has been injected into the mould cavity. Venting of the hollow portion may be achieved by sprue break which involves separating the complete injection nozzle assembly from the mould. In this arrangement, the movable valve member is positioned concentrically with the aperture for injecting the material into the mould cavity, and the primary function of the valve member is to separate the input of material and fluid to prevent mingling.

According to the invention there is provided an apparatus for producing an injection moulding of plastics material comprising means for introducing a supply of plastics material through one or more openings in a mould space, and means for introducing a pressurised gas through a separate opening in the mould space into the plastics material filling the mould space whereby the gas creates a gas containing cavity in the plastics material and for thereafter relieving the gas pressure within the gas containing cavity before the mould is opened, characterised in that said gas supply/pressure relieving means comprise at said separate opening a valve port opening directly into the mould space, a movable valve member for opening and closing the valve port, and means to supply pressurised gas to the mould space, the gas supply means is arranged to supply gas through the valve member whilst the valve member is in a valve port closed position before the moulding cycle starts and remains in the closed position until the end of the moulding cycle, and at the end of the moulding cycle, the supply of pressurised gas can be terminated and pressurised gas in the cavity in the moulding can be vented to the atmosphere due to movement of the valve member to a valve port open position.

Preferably said gas supply/pressure relieving means comprise a first passageway in said valve member through which the pressurised gas enters the plastics material and at the end of the moulding cycle, the supply of pressurised gas can be terminated and pressurised gas in the cavity in the moulding can be vented through a second passageway to the atmosphere due to movement of the valve member to a valve port open position, said first and second passageways converging at the opening through which the gas enters the mould space.

It is also preferred that a non-return valve is situated in an outlet end of the first passageway such that neither plastics material nor pressurised gas can pass back through the first passageway. In this case the outlet end of the valve member is preferably a separately constructed cap which houses the non-return valve.

Preferably the second passageway contains the valve member whereby when the valve member is opened the pressurised gas passes around the valve member into the second passageway and thereby to the atmosphere.

The valve member is preferably connected to the piston of a piston and cylinder for moving the valve member between its valve port closed and valve port open positions.

The gas supply/pressure relieving means may be provided at each of two or more openings in the mould space.

In one embodiment of the invention the means for introducing a supply of plastics material includes a hot runner system leading to the or each opening through which the plastics material is introduced into the mould space.

The means for introducing a supply of plastics material may be associated with valve means, e.g. a slide valve, for closing off the supply means when the required amount of plastics material has been supplied.

By way of example, specific embodiments in accordance with the invention will be described with reference to the accompanying diagrammatic drawings in which:-

Figure 1 shows an injection moulding machine having a hot runner manifold;

Figure 2 is a detail sectional view of the retractable gas injection nozzle of the injection moulding machine of Figure 1, the nozzle being in its forward position prior to the introduction of plastics material;

Figure 3 is a similar view to Figure 2, in elevation, the gas injection nozzle being in its withdrawn position after the moulding operation has been finished;

Figure 4 shows an injection moulding machine having a gas injection nozzle associated with an opening at a different position in the mould space;

Figure 5 shows another injection moulding machine having two gas injection nozzles at different positions in the mould space; and

Figures 6 to 9 illustrate further embodiments of injection moulding machines in accordance with the invention in which the mould space has a sprue forming insert instead of being associated with a hot runner system.

This example concerns an apparatus for producing injection mouldings of plastics material which is based on the apparatus described in British Patent Specification No. 2139548. In that apparatus there is provided a screw ram for introducing plastics material into a mould space, and a passageway through which pressurised gas is introduced under controlled conditions to create a gas containing cavity in the plastics material. A piston and cylinder arrangement maintains the pressurisation in the gas whereby the pressurised gas in the plastics material causes the plastics material to flow throughout the mould space with the gas containing cavity within the plastics material, the cavity thereby extending with the plastics material. The same piston and cylinder is also used to maintain the gas pressure within the gas containing cavity when the plastics material has extended over the whole of the mould space, to hold the plastics material positively against the mould surface as the plastics material solidifies and cools until the moulding can itself sustain the form dictated by the mould surface. Valve means are then opened for relieving the gas pressure within the gas containing cavity before the mould is opened.

The position for introducing the pressurised gas may be at one or more selected positions within the mould space.

With reference to the drawings, a mould 9 of an injection moulding machine has upper and lower parts 11, 12 defining a mould space 13 of complex design and incorporating a rib 16. The mould parts 11, 12 are mounted between a fixed upper platen 10 and a lower platen 14 movable by a hydraulic ram 15. Also, in this embodiment, within the upper mould part 11 is a hot runner manifold 17 leading to a desired point of entry or opening 43 to the mould space 13.

A screw ram 18 is provided for introducing molten thermoplastics material 19 through a nozzle assembly 20 to the hot runner manifold 17 and hence through the opening 43 into the mould space 13. The nozzle assembly is provided with a shut-off slide valve 21 actuated by a bell-crank lever 22 and a link 23 connected to a hydraulic cylinder 24. The valve 21 is shown in its closed position at the end of the moulding cycle which includes the introduction of the plastics material. The closed valve 21 prevents any return movement of the plastics material to the barrel of the screw ram 18. The screw ram may then be refilled with plastics material in preparation for the next moulding cycle.

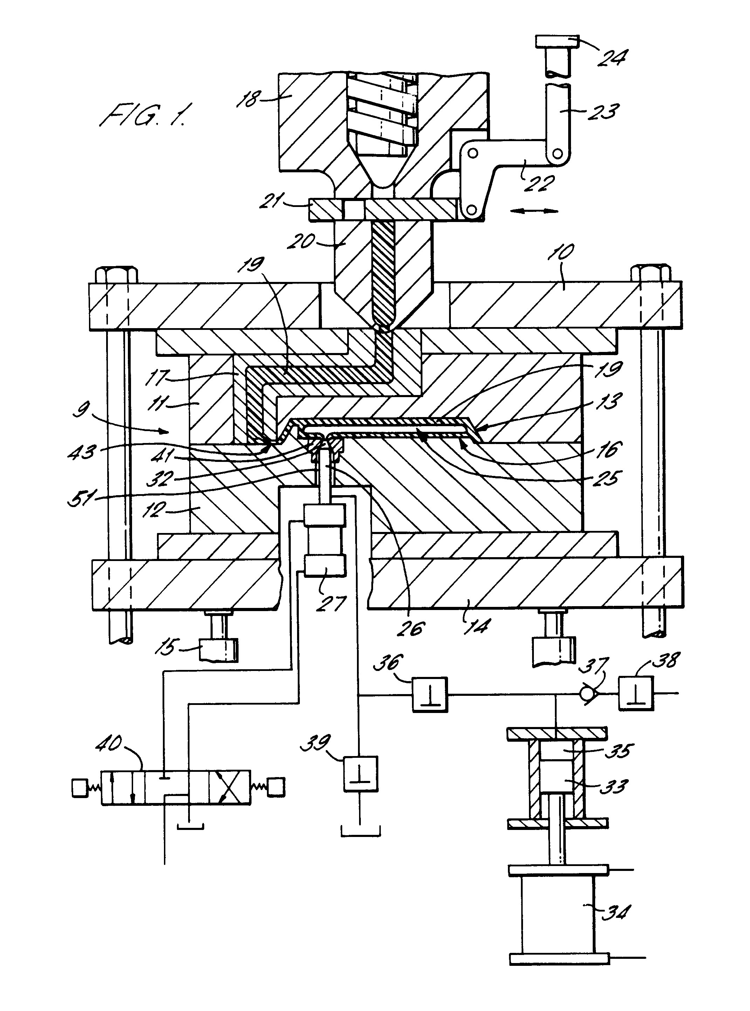

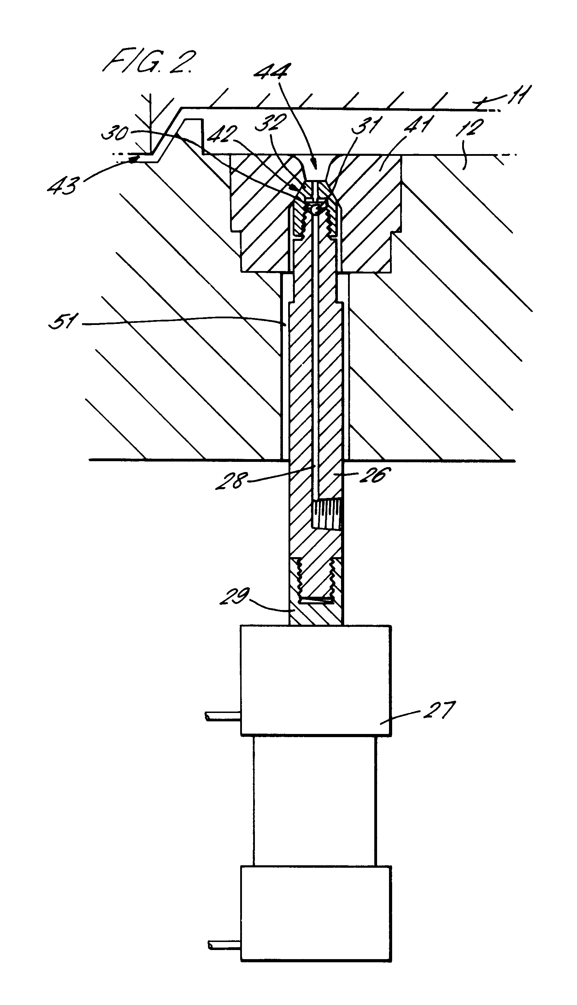

The passageway through which pressurised gas is introduced to create a gas containing cavity 25 in the plastics material 19 is the bore 28 of a retractable nozzle or valve member 26 connected to the piston 29 of a hydraulic or pneumatic cylinder 27. The downstream end of the nozzle 26 is located at a separate opening 44 in the mould space and contains a non-return valve 30 (Figure 2) comprising a ball 31 held captive by a screw-on cap 32. Pressurised gas is supplied to the upstream end of the nozzle 26 from a chamber 35 by a piston and cylinder 33, 34, the chamber 35 holding the measured amount of gas, e.g. nitrogen, which it is required to introduce into the plastics material. As described in Specification No. 2139548, the chamber 35 is connected to the nozzle 26 via a solenoid operated valve 36, and to a gas supply (not shown) via a non-return valve 37 and a pressure regulator 38. Downstream of the valve 36, the connection has a feed to waste via another solenoid operated valve 39.

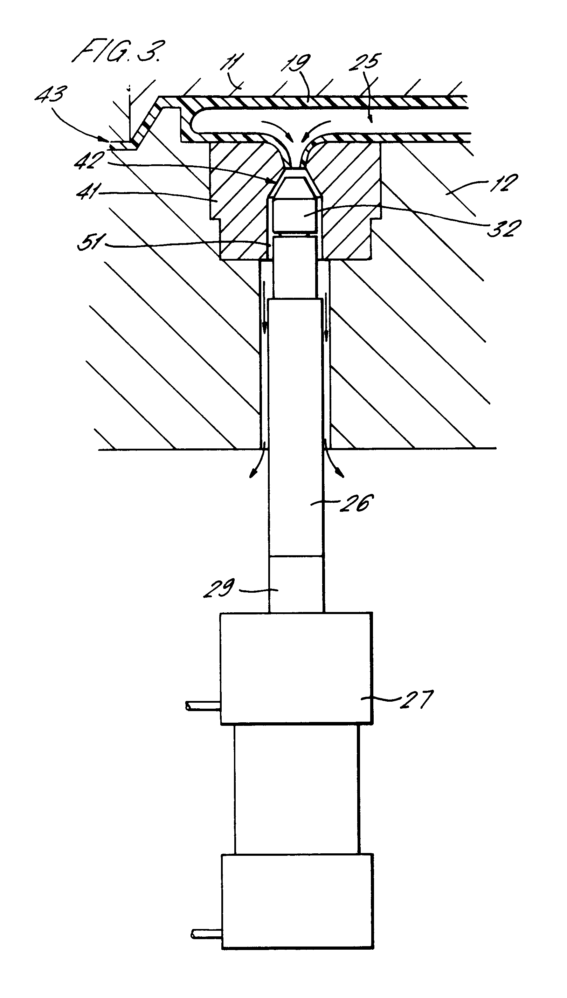

The piston and cylinder 29, 27 is controlled via a solenoid operated valve 40 by control means (not shown) to move the nozzle 26 between a forward position (Figure 2) and a withdrawn position (Figure 3). In the forward position, the cap 32 of the nozzle is in sealing engagement with a conical valve seat of a valve port 42 opening directly into the mould space at the opening 44 and provided, in this embodiment, by an insert 41 in the lower mould part 12. The pressure applied by the piston 29 is greater than the pressure applied by the plastics material within the mould space 13 and the back pressure of the gas which is creating the gas containing cavity 25. In the withdrawn or valve port open position of the nozzle 26, gas pressure within the cavity is relieved through the opening 44, i.e. gas from the cavity readily passes through the valve port 42 around the nozzle 26 to the atmosphere. The ball 31 of the non-return valve 30 prevents the gas returning back along the bore of the nozzle.

In general terms the process of injection moulding is the same as described in detail in British Patent Specification No. 2139548. It is thus sufficient to explain that at the start of the moulding cycle the nozzle or valve member 26 is held forward under pressure by the piston and cylinder 29, 27 thereby closing the valve port 42 (Figure 2). The screw ram 18 contains plastics material and the slide valve 21 is open. The chamber 35 is also filled with the measured quantity of pressurised gas, and the valves 36 and 39 are both closed.

Operation of the screw ram 18 introduces the plastics material into the mould space 13 through the opening 43 via the hot runner manifold 17. Simultaneously a gas delay timer is started. At the end of this delay time, the outlet end of the nozzle 26 is immersed in plastics material. The valve 36 is then opened and the piston and cylinder 33, 34 is operated to introduce gas through the nozzle 26 into the plastics material to create a gas containing cavity in the plastics material. The pressurisation in the gas is maintained by the piston and cylinder 33, 34 whereby the gas in the plastics material causes the plastics material to flow throughout the mould space with the gas containing cavity within the plastics material, the cavity thereby extending with the plastics material until the plastics material has extended over the whole of the mould space. When the desired amount of plastics material has been introduced into the mould, the slide valve 21 is closed and the screw ram refilled with plastics material. Meanwhile, the supply of pressurised gas is terminated, but the piston 33 remains at the forward end of its stroke to maintain the gas pressure within the gas containing cavity to hold the plastics material in the mould space positively against the mould surface as the plastics material solidifies and cools until the moulding can itself sustain the form dictated by the mould surface.

The valve 36 is closed and the piston 33 withdrawn. The cylinder 34 is then refilled with another measured quantity of gas under pressure. The valve 39 is also opened and the gas downstream of the valve 36 in the connection to the nozzle 26 passes to waste.

Furthermore, the valve 40 is reversed so that the piston 29 withdraws the nozzle 26 and the gas in the gas containing cavity passes through the opening 44, the open valve port 42, and a second passageway 51 surrounding the nozzle 26 to the atmosphere (Figure 3) thereby relieving the gas pressure in the cavity. The mould 10 is then opened and the moulding removed. Finally the piston and cylinder 29 is operated to return the nozzle 26 to its forward position (Figure 2) to await the introduction of plastics material during the next moulding cycle.

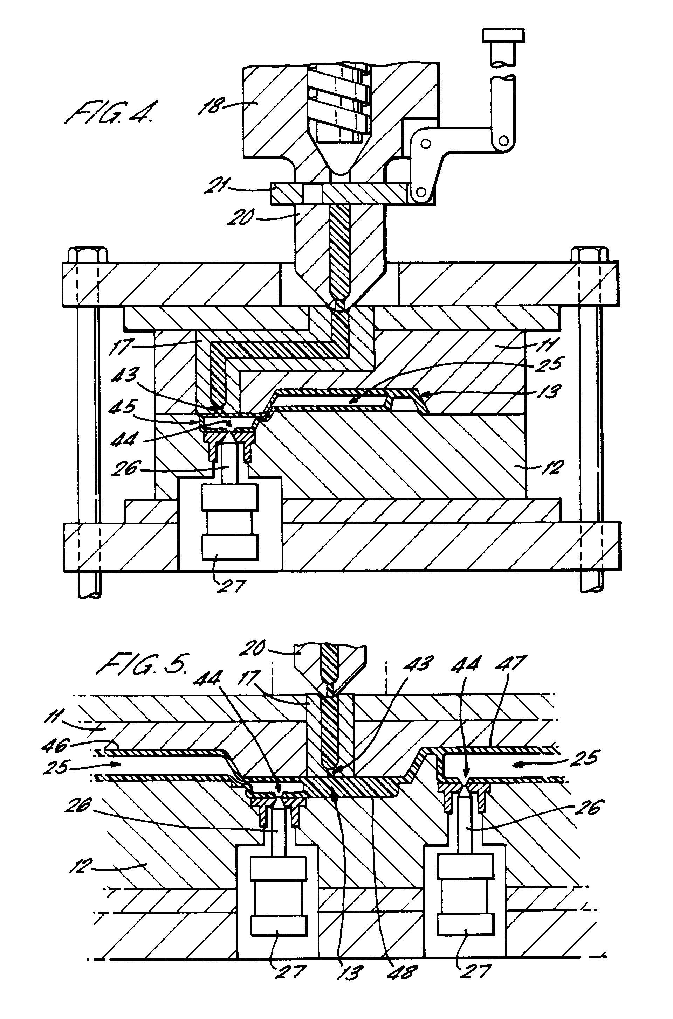

The embodiment illustrated in Figure 4 is similar to the injection moulding machine of Figure 1 and operates in precisely the same manner. The only difference is the form of the mould space 13 which has an extension part 45 containing both the openings 43, 44 for the plastics material and the pressurised gas respectively.

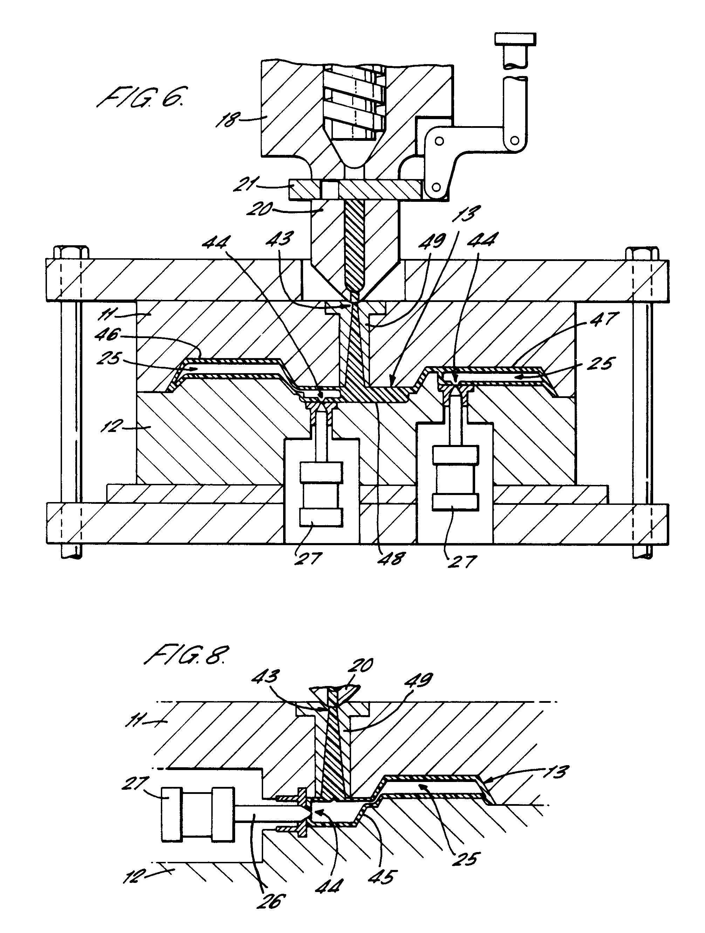

In Figure 5, the injection moulding machine again has a hot runner manifold 17 leading to an opening 43 through which the plastics material enters the mould space 13. In this embodiment, the mould space has two article forming portions 46, 47 interconnected by a common central portion 48. The entry opening 43 for the plastics material and the pressurised gas opening 44 for the left-hand article forming portion 46 as viewed in Figure 5 are positioned in the central portion 48, whilst the gas opening 44 for the right-hand article forming portion 47 is disposed in that portion of the mould space.

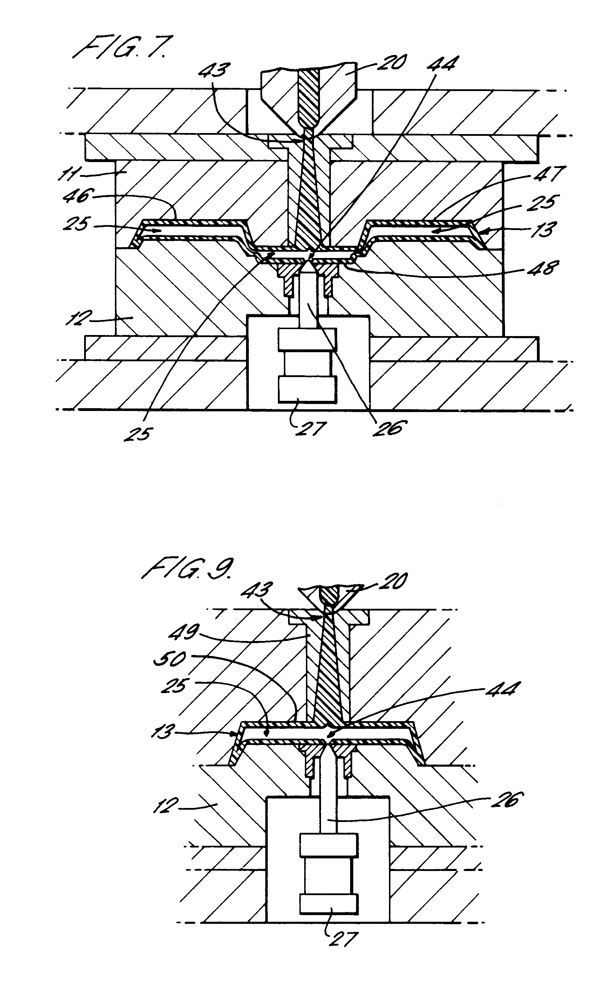

The embodiments of Figures 6 to 9 are different from the embodiments described above in that the hot runner manifold 17 is omitted. Instead, the mould space contains a sprue forming insert 49 through which the molten plastics material is fed by the supply nozzle 20. The upstream end of the insert 49 thus defines the entry opening 43 for the plastics material into the mould space 13. Otherwise, the moulding process for each of these embodiments remains unchanged.

More particularly, the embodiment of Figure 6 is similar to the embodiment of Figure 5 in that the mould space 13 has two article forming portions 46, 47 interconnected by a common central portion 48. The downstream end of the sprue forming insert 49 opens into the central portion 48, whilst the cavities 25 in the plastics material in the two article forming portions 46, 47 are formed by pressurised gas entering the plastics material through different openings 44.

In Figure 7, the mould space has two article forming portions 46, 47 but there is only one pressurised gas entry opening 44 disposed centrally of the common interconnecting portion 48, and directly beneath the downstream end of the sprue forming insert 49. The pressurised gas entering the mould space 13 through the single opening 44 forms a gas containing cavity in both mouldings.

Figure 8 illustrates an embodiment in which the downstream end of the sprue forming insert 49 is associated with an extension part 45 of the mould space 13. The pressurised gas nozzle or valve member 26 is also arranged at 90° to the sprue forming insert 49 to indicate that the direction of flow of the gas into the mould space through the opening 44 may be varied relative to the direction of flow of the stream of plastics material.

In the embodiment of Figure 9, both the downstream end of the sprue forming insert 49 and the pressurised gas opening 44 open directly into the article forming portion 50 of the mould space 13.

The invention is not restricted to the details of the specific embodiments described above. For example, the outlet end of the or each nozzle 26 may protrude into the flow of plastics material within the mould space rather than be disposed wholly in the lower mould part 12.

Also, particularly in relation to the embodiments of Figures 1 to 5 which have a hot runner manifold 17, there may be provided a hot runner manifold leading to two or more openings 43 through which the molten plastics material enters the mould space 13.

## Claims

1. Apparatus for producing an injection moulding of plastics material comprising means (18) for introducing a supply of plastics material (19) through one or more openings (43) in a mould space (13), and means (34) for introducing a pressurised gas through a separate opening (44) in the mould space into the plastics material filling the mould space whereby the gas creates a gas containing cavity (25) in the plastics material and for thereafter relieving the gas pressure within the gas containing cavity before the mould is opened, characterised in that said gas supply/pressure relieving means comprise at said separate opening (44) a valve port (42) opening directly into the mould space, a movable valve member (26) for opening and closing the valve port, and means (34) to supply pressurised gas to the mould space, the gas supply means (34) is arranged to supply gas through the valve member (26) whilst the valve member is in a valve port closed position before the moulding cycle starts and remains in the closed position until the end of the moulding cycle, and at the end of the moulding cycle, the supply of pressurised gas can be terminated and pressurised gas in the cavity in the moulding can be vented to the atmosphere due to movement of the valve member to a valve port open position.

2. Apparatus as claimed in Claim 1, characterised in that said gas supply/pressure relieving means comprise a first passageway (28) in said valve member (26) through which the pressurised gas enters the plastics material and at the end of the moulding cycle, the supply of pressurised gas can be terminated and pressurised gas in the cavity in the moulding can be vented through a second passageway (51) to the atmosphere due to movement of the valve member to a valve port open position, said first and second passageways converging at the opening (44) through which the gas enters the mould space.

3. Apparatus as claimed in Claim 2, characterised in that a non-return valve (30) is situated in an outlet end of the first passageway (28) such that neither plastics material nor pressurised gas can pass back through the first passageway.

4. Apparatus as claimed in Claim 3, characterised in that the outlet end of the valve member (26) is a separately constructed cap (32) which houses the non-return valve (30).

5. Apparatus as claimed in any one of Claims 2 to 4, characterised in that the second passageway (51) contains the valve member (26) whereby when the valve member is opened the pressurised gas passes around the valve member into the second passageway and thereby to the atmosphere.

6. Apparatus as claimed in any one of the preceding claims, characterised in that the valve member 26) is connected to the piston (29) of a piston and cylinder (27) for moving the valve member between its valve port closed and valve port open positions.

7. Apparatus as claimed in any one of the preceding claims, characterised in that said gas supply/pressure relieving means (26, 34) is provided at each of two or more openings (44) in the mould space (13).

8. Apparatus as claimed in any one of the preceding claims, characterised in that the means (18) for introducing a supply of plastics material (19) includes a hot runner system (17) leading to the or each opening (43) through which the plastics material is introduced into the mould space (13).

9. Apparatus as claimed in any one of the preceding claims, characterised in that the means (18) for introducing a supply of plastics material (19) is associated with valve means (21) for closing off the supply means when the required amount of plastics material has been supplied.

10. Apparatus as claimed in Claim 9, characterised in that the valve means associated with the means (18) for introducing a supply of plastics material (19) is a slide valve (21).

## Revendications

1. Dispositif pour produire un moulage par injection de matière plastique comprenant un moyen (18) pour introduire une quantité de matière plastique (19) via une ou plusieurs ouvertures (43) dans un espace de moule (13), et un moyen (34) pour introduire un gaz sous pression via une ouverture séparée (44) dans l'espace de moule dans la matière plastique remplissant l'espace de moule de manière que le gaz crée une cavité (25) renfermant le gaz dans la matière plastique puis pour relâcher ensuite la pression de gaz dans la cavité (25) renfermant le gaz avant l'ouverture du moule, caractérisé en ce que ledit moyen de distribution de gaz et de relâchement de la pression comprend à ladite ouverture séparée (44) un orifice de clapet (42) donnant directement dans l'espace de moule, un clapet mobile (26) pour ouvrir et fermer l'orifice de clapet, et un moyen (34) pour distribuer le gaz sous pression à l'espace de moule, le moyen de distribution de gaz (34) est agencé pour distribuer le gaz via le clapet (26) tandis que le clapet se trouve dans une position de fermeture d'orifice de clapet avant que le cycle de moulage commence et reste dans la position fermée jusqu'à la fin du cycle de moulage, et à la fin dudit cycle, la distribution du gaz sous pression peut être arrêtée et le gaz sous pression dans la cavité dans le moulage peut être évacué à l'extérieur par le déplacement du clapet jusqu'à une position d'ouverture d'orifice de clapet.

2. Dispositif selon la revendication 1, caractérisé en ce que ledit moyen de distribution de gaz et de relâchement de la pression comprend un premier passage (28) dans ledit clapet (26) via lequel le gaz sous pression entre dans la matière plastique et, à la fin du cycle de moulage, la distribution de gaz sous pression peut être arrêtée et le gaz sous pression dans la cavité dans le moulage peut être évacué via un second passage (51) à l'extérieur par le déplacement du clapet jusqu'à une position d'ouverture d'orifice de clapet, lesdits premier et second passage convergeant à l'ouverture (44) via laquelle le gaz entre dans l'espace de moule.

3. Dispositif selon la revendication 2, caractérisé en ce qu'un clapet de non-retour (30) est disposé dans une extrémité de sortie du premier passage (28) de manière que ni la matière plastique, ni le gaz sous pression ne puisse retourner dans le premier passage.

4. Dispositif selon la revendication 3, caractérisé en ce que l'extrémité de sortie du clapet (26) est un capuchon (32) construit séparément qui loge le clapet de non-retour (30).

5. Dispositif selon l'une quelconque des revendications 2 à 4, caractérisé en ce que le second passage (51) renferme le clapet (26) de manière que lorsque le clapet est ouvert, le gaz sous pression passe autour du clapet dans le second passage et ainsi à l'extérieur.

6. Dispositif selon l'une quelconque des revendications précédentes, caractérisé en ce que le clapet (26) est relié au piston (29) d'un ensemble cylindre-piston (27) pour déplacer le clapet entre sa position de fermeture d'orifice de clapet et sa position d'ouverture d'orifice de clapet.

7. Dispositif selon l'une quelconque des revendications précédentes, caractérisé en ce que ledit moyen de distribution de gaz et de relâchement de la pression (26, 34) est disposé à chacune des deux ouvertures (44) ou davantage dans l'espace de moule (13).

8. Dispositif selon l'une quelconque des revendications précédentes, caractérisé en ce que le moyen (18) pour introduire une quantité de matière plastique (19) comprend un système de canal chauffé (17) menant à l'ouverture ou à chaque ouverture (43) via lequel la matière plastique est introduite dans l'espace de moule (13).

9. Dispositif selon l'une quelconque des revendications précédentes, caractérisé en ce que le moyen (18) pour introduire une quantité de matière plastique (19) est associé au clapet (21) pour fermer le moyen de distribution lorsque la quantité requise de matière plastique a été distribuée.

10. Dispositif selon la revendication 9, caractérisé en ce que le clapet associé au moyen (18) pour introduire une quantité de matière plastique (19) est un robinet-vanne (21).

**Patentansprüche**

1. Vorrichtung zum Herstellen von Spritzgußteilen aus Kunststoffmaterial mit einer Einrichtung (18) zum Einführen eines Vorrats an Kunststoffmaterial (19) durch eine oder mehrere Öffnungen (43) in einen Raum einer Form (13), und Mitteln (34) zum Einführen eines Druckgases durch eine separate Öffnung (44) in den Formraum (13), wobei das Gas einen gasenthaltenden Hohlraum (25) in dem Kunststoffmaterial erzeugt, und nachfolgendem Entlasten des Gasdruckes innerhalb des gasenthaltenden Hohlraumes vor dem Öffnen der Form, dadurch **gekennzeichnet,** daß die Mittel für die Gaszufuhr/Druckentlastung an der separaten Öffnung (44) aufweisen eine Ventilöffnung (42), die sich direkt in den Formraum öffnet, ein bewegbares Ventilelement (26) zum Öffnen und Schließen der Ventilöffnung, und Mitteln (34) zum Zuführen von Druckgas in den Formraum, wobei die Gaszuführungsmittel (34) so angeordnet sind, daß vor Beginn des Spritzgießzyklus Gas durch das Ventilelement (26) zugeführt wird, während sich das Ventilelement (26) in der die Ventilöffnung schließenden Position befindet, und das Ventilelement (26) bis zum Ende des Spritzgießzyklus in der Schließposition bleibt, wobei die Zufuhr von Druckgas infolge der Veschiebung des Ventilelementes in eine Position, in der die Ventilöffnung offen ist, beendet wird und das Druckgas aus dem Hohlraum in dem Formteil in die Atmosphäre austreten kann.

2. Vorrichtung nach Anspruch 1, dadurch **gekennzeichnet,** daß die Gaszufuhr-Druckentlastungsmittel in dem Ventilelement (26) einen ersten Durchgangsweg (28) aufweisen, durch welchen das Druckgas in das Kunststoffmaterial eintritt und am Ende des Formzyklus kann die Zufuhr von Druckgas beendet werden, und das Druckgas im Hohlraum des Formteils kann infolge der Verschiebung des Ventilelementes in eine Position, in der die Ventilöffnung offen ist, durch einen zweiten Durchgangsweg (51) in die Atmosphäre austreten, wobei die ersten und zweiten Durchgangswege an der Öffnung (44), durch welche das Gas in den Formraum eintritt, zusammen laufen.

3. Vorrichtung nach Anspruch 2, dadurch **gekennzeichnet,** daß am Ausgangsende des ersten Durchgangweges (28) ein Rückschlagventil (30) angeordnet ist, so daß weder Kunststoffmaterial noch Druckgas durch den ersten Durchgangsweg zurückströmen können.

4. Vorrichtung nach Anspruch 3, dadurch **gekennzeichnet,** daß das Ausgangsende des Ventilelementes (26) eine separat konstruierte Kappe (32) ist, in der das Rückschlagventil (30) aufgenommen ist.

5. Vorrichtung nach jedem der Ansprüche 2 bis 4, dadurch **gekennzeichnet,** daß der zweite Durchgangsweg (51) das Ventilelement (26) enthält, wobei bei geöffnetem Ventilelement das Druckgas um das Ventilelement herum in den zweiten Durchgangsweg und damit in die Atmosphäre strömt.

6. Vorrichtung nach jedem der vorstehenden Anprüche, dadurch **gekennzeichnet,** daß das Ventilelement (26) an den Kolben (29) einer Kolben/Zylinder/Anordnung (27) angeschlossen ist, um das Ventilelement zwischen seiner die Ventilöffnung schließenden und öffnenden Position zu verschieben.

7. Vorrichtung nach jedem der vorstehenden Ansprüche, dadurch **gekennzeichnet,** daß die Gaszufuhr-Druckentlasungsmittel (26, 34) an jeder der zwei oder mehreren Öffnungen (44) im Formraum (13) angeordnet sind.

8. Vorrichtung nach jedem der vorstehenden Ansprüche, dadurch **gekennzeichnet,** daß die Einrichtung (18) zum Einführen eines Vorrats an Kunststoffmaterial (19) ein Heißkanal - System (17) aufweist, das zu der oder jeder Öffnung (43), durch welche Kunststoffmaterial in den Formraum (13) eingeführt wird, führt.

9. Vorrichtung nach jedem der vorstehenden Ansprüche, dadurch **gekennzeichnet,** daß der Einrichtung (18) zum Einführen eines Vorrates an Kunststoffmaterial (19) eine Ventileinrichtung (21) zum Abschließen der Zuführeinrichtung, nachdem eine erforderliche Menge Kunststoffmaterial zugeführt worden ist, zugeordnet ist.

10. Vorrichtung nach Anspruch 9, dadurch **gekennzeichnet,** daß die Ventileinrichtung, die der Einrichtung (18) zum Zuführen eines Vorrates an Kunststoffmaterial (19) zugeordnet ist, ein Schieber (21) ist.

FIG. 1.

FIG. 2.

FIG. 3.

FIG. 4.

FIG. 5.

FIG. 6.

FIG. 8.

FIG.7.

FIG.9.